# EUROPÄISCHE PATENTSCHRIFT

(11) **EP 3 083 483 B1**
(45) Veröffentlichungstag und Bekanntmachung des Hinweises auf die Patenterteilung: **29.08.2018**
(21) Anmeldenummer: 14812434.0
(22) Anmeldetag: 08.12.2014
(51) Int. Cl.: B67C 3/22, F16P 1/02

(54) **BEHÄLTERBEHANDLUNGSMASCHINE MIT SCHUTZVERKLEIDUNG**
CONTAINER TREATMENT DEVICE WITH PROTECTIVE ENCLOSURE
DISPOSITIF DE TRAITEMENT DES RECIPIENS AVEC REVETEMENT PROTECTEUR

(30) Priorität: 20.12.2013 DE 102013114614
(43) Veröffentlichungstag der Anmeldung: 26.10.2016
(73) Patentinhaber: KHS GmbH, 44143 Dortmund (DE)
(72) Erfinder: CLÜSSERATH, Ludwig, 55543 Bad Kreuznach (DE); BERGER, Thomas, 61479 Glashütten (DE)
(86) Internationale Anmeldenummer: PCT/EP2014/076863
(87) Internationale Veröffentlichungsnummer: WO 2015/091050

(56) Entgegenhaltungen:
- EP-A1- 0 203 040
- EP-A1- 2 583 932
- WO-A1-2010/099822
- CA-A1- 2 272 198
- DE-A1- 3 029 755
- DE-A1- 3 515 669
- DE-U1- 9 306 138

## Beschreibung

Die Erfindung bezieht sich auf eine Behälterbehandlungsmaschine mit einer Schutzverkleidung gemäß dem Oberbegriff des Patentanspruchs 1.

Insbesondere beim Druckfüllen von Behältern in Form von Flaschen aus Glas besteht die Gefahr, dass vorgeschädigte Behälter unter der Wirkung des Innendrucks platzen, und zwar insbesondere auch beim Vorspannen auf den jeweiligen Fülldruck in der sogenannten Spannzone der verwendeten Füllmaschine. Bei diesem Platzen entstehen zahlreiche größere und kleinere Glassplitter bzw. Behälterscherben oder Behälterbruchstücke, welche mit hoher Geschwindigkeit und damit mit hoher kinetischer Energie von der jeweiligen Behandlungsposition wegbewegt bzw. weggeschleudert werden. Um zu vermeiden, dass derartige Behälterbruchstücke Personen verletzen und/oder die Behandlungsmaschine sowie deren Umgebung zusätzlich verschmutzen, ist es bekannt, an kritischen Bereichen einer Behälterbehandlungsmaschine, d.h. dort wo die Gefahr eines Behälterbruchs besteht, eine Schutzverkleidung als Scherbenschutz vorzusehen. Die bisher üblichen und bekannten Schutzverkleidungen bestehen aus Wandelementen aus Edelstahlblechen, die dicht an einem Behandlungs- oder Füllpositionen aufweisenden Rotor einer Behälterbehandlungs- oder Füllmaschine umlaufender Bauart positioniert und an dem mit dem Rotor nicht umlaufenden Maschinegestell der Behälterbehandlungsmaschine fixiert sind. Nachteilig hierbei ist nicht nur, dass eine derartige Schutzverkleidung für Reinigungs- und Wartungsarbeiten an der Behälterbehandlungsmaschine aufwendig demontiert werden muss, sondern nachteilig ist vor allem auch, dass die im Falle eines Behälterbruchs entstehenden Behälterbruchstücke mit hoher Geschwindigkeit gegen die starren und fest fixierten Wandelemente prallen, dort durch den Aufprall weiter zerbrechen und zum Teil durch Ab- oder Zurückprallen an den Wandelementen zurück in Richtung der Behälterbehandlungsmaschine geschleudert werden. Hierdurch kommt es zu einer weiteren, unerwünschten Verschmutzung der Behälterbehandlungsmaschine und der Funktionselemente der Behandlungspositionen. Insbesondere können die Glassplitter und -scherben auch an Bauteilen anhaften oder auf diesen liegen bleiben, so dass letztlich auch dadurch die Gefahr besteht, dass Glassplitter oderscherben in die Behälter gelangen.

Eine Behälterbehandlungsmaschine mit einer Schutzverkleidung gemäß dem Oberbegriff des Anspruchs 1 ist in der DE 93 06 138 U beschrieben. Die DE 10 2010 004 002 B beschreibt eine durchschlagssichere mehrschichtige Schutzverkleidung für eine rotierende Holzbehandlungsmaschine. Die DE 1 627 069 A zeigt eine Späneschutzverkleidung für Fräsmaschinen aus einem Kettengeflecht.

Aufgabe der Erfindung ist es, eine Behälterbehandlungsmaschine aufzuzeigen, die diesen Nachteil vermeidet. Zur Lösung dieser Aufgabe ist eine Behälterbehandlungsmaschine entsprechend dem Patentanspruch 1 ausgebildet. Vorteilhafte Weiterbildungen der Erfindung sind Gegenstand der abhängigen Ansprüche.

Eine Besonderheit der Erfindung besteht darin, dass die Schutzverkleidung nicht von einem oder mehreren starren und fest fixierten Wandelementen gebildet ist, sondern von einer Vielzahl von Verkleidungssegmenten, die aufeinanderfolgend eine Schutzwand bildenden und die insbesondere jeweils frei pendelnd an einem oberen Ende hängend gehalten sind. Hierdurch können die Verkleidungssegmente beim Auftreffen von Behälterbruchstücken mit diesen jeweils seitlich ausweichen und dabei die kinetische Energie der Bruchstücke durch Umwandlung in Lageenergie aufnehmen, sodass die Behälterbruchstücke von dem Verkleidungssegmenten abgefangen werden, ohne dass es zu einem weiteren Zerbrechen und zu einem Zurückprallen der Behälterbruchstücke an der Schutzverkleidung kommt.

Die Schutzverkleidung der erfindungsgemäßen Behälterbehandlungsmaschine kann problemlos gereinigt und/oder desinfiziert werden. Bei einer bevorzugten Ausführungsform der Erfindung sind die einzelnen Verkleidungssegmente an wenigstens einer Führung hängend gehalten und dabei bevorzugt entlang dieser Führung ähnlich einem Lamellenvorhang verschiebbar, sodass die Schutzverkleidung problemlos aus einem wirksamen Zustand, in dem die aufeinanderfolgenden Verkleidungssegmente die Schutzwand bilden, in einen nicht wirksamen Zustand überführt werden kann, in welchem dann eine von der Schutzverkleidung nicht behinderte freie Zugänglichkeit zu der Behälterbehandlungsmaschine besteht.

Im Detail können die Verkleidungssegmente unterschiedlich ausgebildet sein, beispielsweise als lamellenartige Segmente, die jeweils aus einem Zuschnitt eines Flachmaterials bestehen, als Rohrstück, als Ketten oder Kettenlängen, wobei in diesem Fall jedes Verkleidungssegment von wenigstens einer hängend gehaltenen Kettenlänge gebildet ist, die eine Vielzahl von Kettengliedern aufweist.

Die lamellenartige Ausbildung der Verkleidungssegmente hat den besonderen Vorteil, dass dieser Segmente glatte, leicht zu reinigende und zu desinfizierende Oberflächen aufweisen, sodass eine optimale Schutzwirkung mit der Möglichkeit einer optimalen Reinigung und Desinfizierung erreicht ist.

Die Verkleidungssegmente sind bevorzugt elastisch verformbar und bestehen beispielsweise aus einem metallischen Werkstoff oder aber aus Kunststoff. Weiterhin weisen die Verkleidungssegmente bevorzugt eine solche Länge auf, dass sie mit ihrem unteren Ende über das Niveaus der Behandlungspositionen der Behälterbehandlungsmaschine und/oder über dasjenige Niveau nach unten wegstehen, auf dem sich die Behälter bei der Behandlung mit ihrem unteren Behälterbereich, d.h. beispielsweise mit ihrem Behälterboden bewegen. Die Verkleidungssegmente reichen beispielsweise bis zum Boden, auf dem die Behälterbehandlungsmaschine steht.

"Behälter" sind im Sinne der Erfindung insbesondere Flaschen oder andere Behälter, insbesondere solche aus Glas, bei denen während einer Behandlung die Gefahr eines Behälterbruchs mit dabei wegbewegten oder weggeschleuderten Behälterscherben oder Behälterbruchstücken besteht, diese Gefahr zumindest nicht ausgeschlossen werden kann.

Unter "Druckfüllen" ist im Sinne der Erfindung allgemein ein Füllverfahren zu verstehen, bei dem der jeweils zu füllende Behälter in Dichtlage gegen ein Füllelement anliegt und in der Regel vor der eigentlichen Füllphase mit einem unter Druck stehenden Spanngas (Inertgas bzw. CO2-Gas) vorgespannt wird, welches dann während des Füllens von dem dem Behälter zufließenden Füllgut zunehmend als Rückgas aus den Behälterinnenraum verdrängt wird. Dieser Vorspannphase können weitere Behandlungsphasen vorausgehen, beispielsweise ein Evakuieren und/oder ein Spülen des Behälterinnenraums mit einem Inertgas, z.B. CO2-Gas usw., und zwar ebenfalls über die im Füllelement ausgebildeten Gaswege. In Dichtlage mit einem Füllelement einer Füllmaschine befindlicher Behälter bedeutet dabei, dass der jeweilige Behälter in der dem Fachmann bekannten Weise mit seiner Behältermündung dicht an ein Füllelement bzw. an eine dortige Dichtung angepresst anliegt.

Der Ausdruck "im Wesentlichen" bzw. "etwa" bzw. "ca." bedeutet im Sinne der Erfindung Abweichungen vom jeweils exakten Wert um +/- 10%, bevorzugt um +/-5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
Fig. 1 in einer schematischen Draufsicht eine Behälterbehandlungsmaschine in Form einer Füllmaschine zum Druckfüllen von Behältern;
Fig. 2 in einer schematischen Schnittdarstellung eine Behandlungsposition der Behälterbehandlungsmaschine der Figur 1 zusammen mit einem gebrochenen Behälter an dieser Behandlungsposition und einer Schutzverkleidung;
Fig. 3 eine schematische Teildarstellung der Schutzverkleidung der Figur 2 in Seitenansicht;
Fig. 4 in den Positionen a - c das Verhalten der Schutzverkleidung der Figuren 1 und 2 bei auf diese Verkleidung oder deren Verkleidungssegmente auftreffenden Behälterscherben oder Behälterbruchstücken;
Fig. 5 - 7 jeweils in einer Ansicht von oben die seitlichen oder vertikalen Verkleidungssegmente der Schutzverkleidung der Figuren 1 und 2 in einem wirksamen Zustand (Figur 5), in einem geöffneten Zustand (Figur 6) und einem zusammengeschobenen Zustand der Schutzverkleidung (Figur 7);
Fig. 8 und 9 Darstellung ähnlich Figuren 5 und 7, bei einer weiteren Ausführungsform der erfindungsgemäßen Schutzverkleidung;
Fig. 10 und 11 Darstellung ähnlich Figur 4 bei weitere Ausführungsformen der erfindungsgemäßen Schutzverkleidung;
Fig. 12 und 13 Darstellungen wie Figuren 2 und 3 bei einer weiteren Ausführungsform der erfindungsgemäßen Schutzverkleidung.

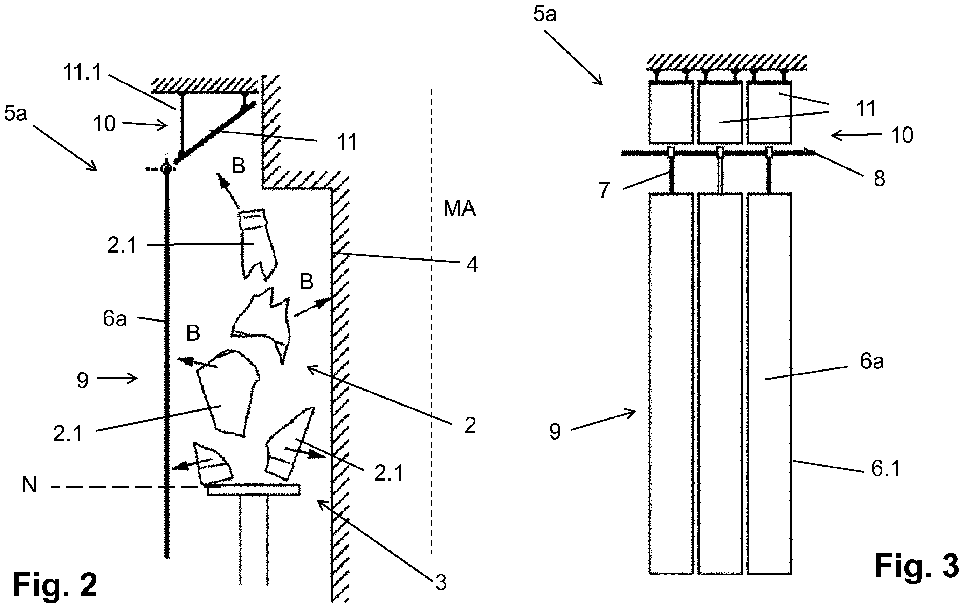

In den Figuren ist mit 1 sehr schematisch eine Behälterbehandlungsmaschine zum Behandeln von Behältern 2 aus Glas oder aus einem ähnlichen nicht metallischen Material bezeichnet. Die Behälterbehandlungsmaschine 1 ist als Maschine umlaufender Bauart mit einer Vielzahl von Behandlungspositionen 3 ausgebildet, die am Umfang eines um eine vertikale Maschinenachse MA umlaufenden Rotors 4 vorgesehen sind. Die zu behandelnden Behälter 2 werden bei umlaufendem Rotor 4 (Pfeil A) den Behandlungspositionen 3 über einen Behältereinlauf 1.1 zugeführt. Die Behandlung der Behälter erfolgt auf einem Winkelbereich der Drehbewegung des Rotors 4 zwischen dem Behältereinlauf 1.1 und einem Behälterauslauf 1.2, an dem die behandelten Behälter 2 den Behandlungspositionen 3 entnommen werden. Die Behälterbehandlungsmaschine 1 ist beispielsweise eine Füllmaschine zum Druckfüllen der Behälter 2 mit einem Füllgut. Hierbei werden die Behälter 2 nach der Übergabe an die jeweilige Behandlungsposition 3 auf einem dem Behältereinlauf 1.1 folgenden Winkelbereich der Drehbewegung des Rotors 4, der auch als Spannzone bezeichnet wird, u.a. mit einem unter Druck stehenden Inert-Gas auf einen Fülldruck vorgespannt, bevor das eigentliche Füllen der Behälter 2 mit dem Füllgut unter Druck erfolgt. Bei der Behandlung befinden sich die Behälter 2 mit ihrem Behälterboden auf dem horizontalen Niveau N. Insbesondere im Bereich dieser Spannzone besteht die Gefahr eines Berstens solcher Behälter 2, die eine Vorschädigung beispielsweise durch thermische Belastungen während einer vorausgegangenen Reinigung aufweisen. Die bei einem solchen Bersten oder Platzen entstehenden Behälterscherben oder Behälterbruchstücke 2.1 bewegen sich mit hoher Geschwindigkeit und damit mit hoher kinetischer Energie von der jeweiligen Behälterbehandlungsposition 3 in nicht kontrollierbaren unterschiedlichen Richtungen weg, wie dies in der Figur 2 mit den Pfeilen B angedeutet ist, und zwar u.a. nach oben und unten sowie bezogen auf die vertikale Maschinenachse MA nach außen. Um u.a. Personenschäden, aber auch Beschädigungen an Maschinen zu vermeiden, die der Behälterbehandlungsmaschine 1 benachbart sind, ist es üblich, zumindest an dem Bereich der Bewegungsbahn der Behandlungspositionen 3, an dem die Gefahr eines Behälterbruchs besteht, d.h. z.B. an der Spannzone, eine Schutzverkleidung vorzusehen. Die bisher üblichen Schutzverkleidungen sind von starren und vollständig fixierten Wandelementen gebildet, die bei einem Behälterbruch zwar ein Wegschleudern der Behälterbruchstücke 2.1 nach außen verhindern, an denen aber auftreffende Behälterscherben teilweise zusätzlich zerbrechen und zum Teil durch Ab- oder Zurückprallen wieder zurück in Richtung der Behälterbehandlungsmaschine geschleudert werden, wodurch es zu einer zusätzlichen unerwünschten Verschmutzung von Komponenten der Behälterbehandlungsmaschine durch Behälterbruchstücke 2.1 kommt und die Reinigung der Behälterbehandlungsmaschine 1 vor erneuter Inbetriebnahme erschwert wird. Durch die erfindungsgemäße Ausbildung der Schutzverkleidung 5 wird dies vermieden.

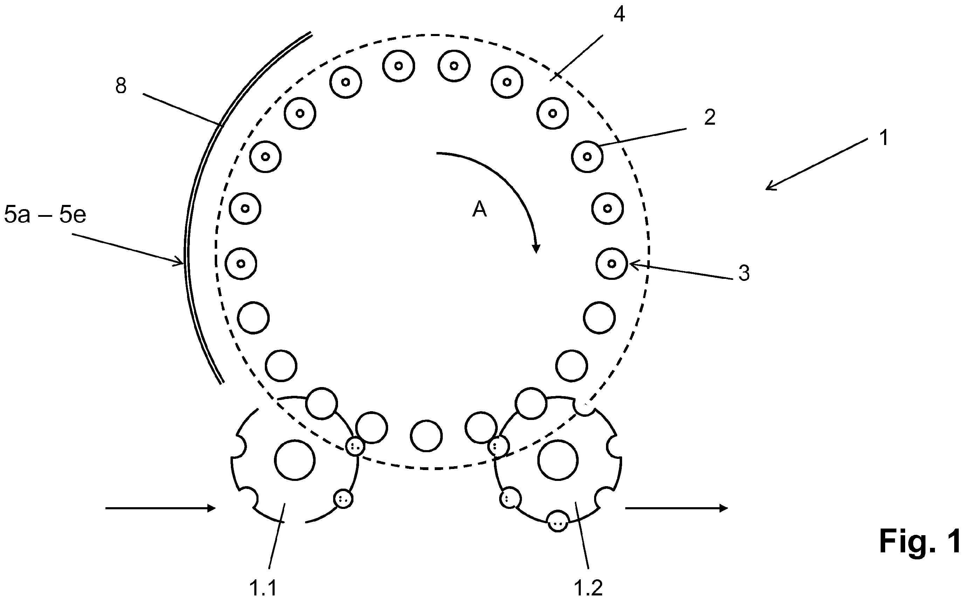

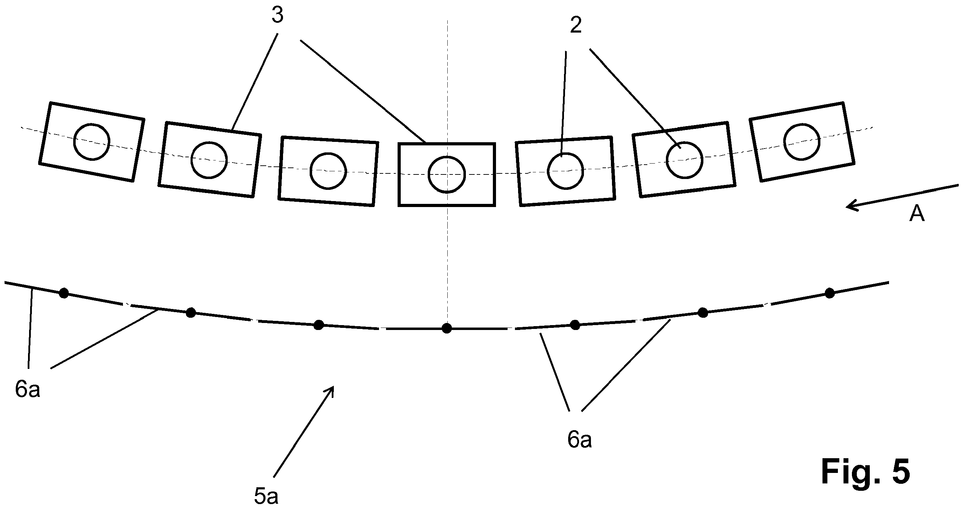

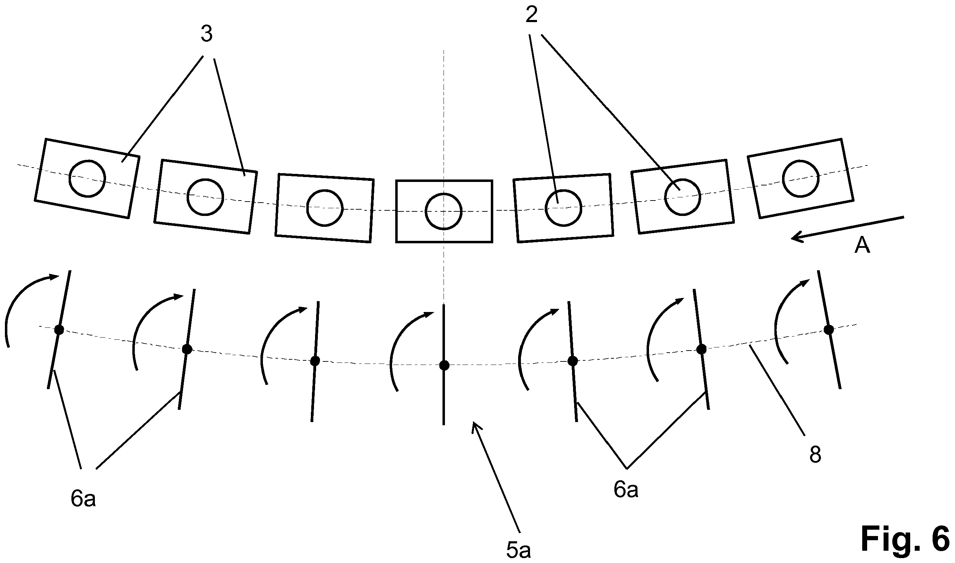

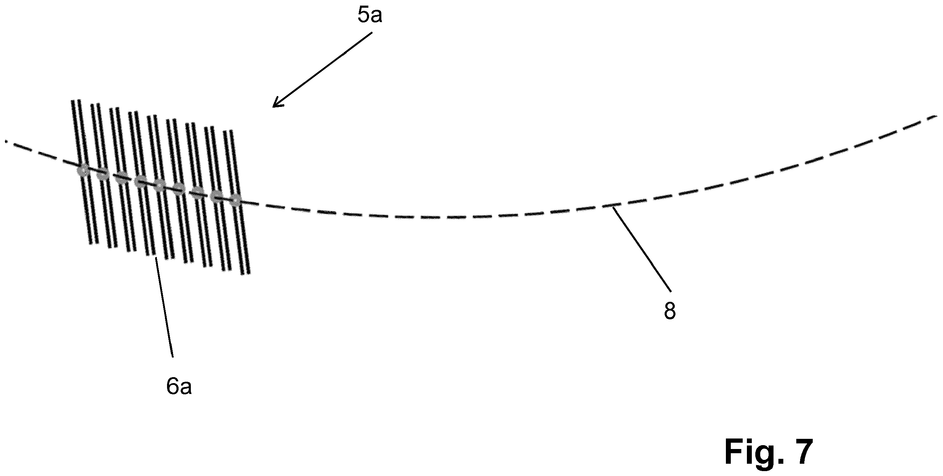

In den Figuren 2 - 6 ist mit 5a eine Ausführungsform der erfindungsgemäßen Schutzverkleidung dargestellt, die beispielsweise an der Spannzone der Behandlungsmaschine 1 vorgesehen ist. Die Schutzverkleidung 5a besteht bei der dargestellten Ausführungsform u.a. aus mehreren Verkleidungssegmenten 6a, die jeweils lamellenartig ausgeführt einen rechteckförmigen Zuschnitt aufweisen und zumindest im Normalzustand der Schutzverkleidung 5a mit den Längsseiten 6.1 dieses Zuschnitts in vertikaler Richtung angeordnet sind. Jedes Verkleidungssegment 6a ist an seinem oberen Ende, d.h. an der dortigen Schmalseite des Zuschnitts mittig über ein Tragelement 7 an einer Führung 8 frei pendelnd gehalten, die sich in der Darstellung der Figur 1 kreisbogenförmig um den Rotor 4 entlang der kritischen Zone, beispielsweise der Spannzone erstreckt. Die unteren Enden der Verkleidungssegmente 6a befinden sich bei der dargestellten Ausführungsform unterhalb des Niveaus N. Mit ihren Tragelementen 7 sind die Verkleidungssegmente 6a entlang der Führung 8 bewegbar sowie zugleich auch um horizontale Achsen und um die Achse der Tragelemente 7, d.h. um ihre vertikale Mittelachse schwenkbar. Hierdurch können die Verkleidungssegmente 6a entsprechend den Figur 3 und 5 in einem wirksamen Zustand angeordnet werden, in welchem die Verkleidungssegmente 6a aneinander anschließen und eine durchgehende vertikale Schutzwand 9 der Schutzverkleidung 5a bilden. Diese kann dann durch Schwenken der Verkleidungssegmente 6a um ihre vertikale Mittelachse ganz oder teilweise geöffnet werden, um beispielsweise eine Zugänglichkeit zu den Behandlungspositionen 3 zu schaffen, wie dies in der Figur 6 dargestellt ist. Weiterhin können die Verkleidungssegmente 6a entsprechend der Figur 7 einen zusammengeschobenen Zustand einnehmen, in welchem sie mit ihren Ebenen radial oder im Wesentlichen radial zur Maschinenachse MA angeordnet sind und ein durch die Schutzverkleidung 5a nicht behinderter Zugang zu der Behälterbehandlungsmaschine 1 und insbesondere auch zu dessen Behandlungspositionen 3 und den dortigen Funktionselementen geschaffen ist.

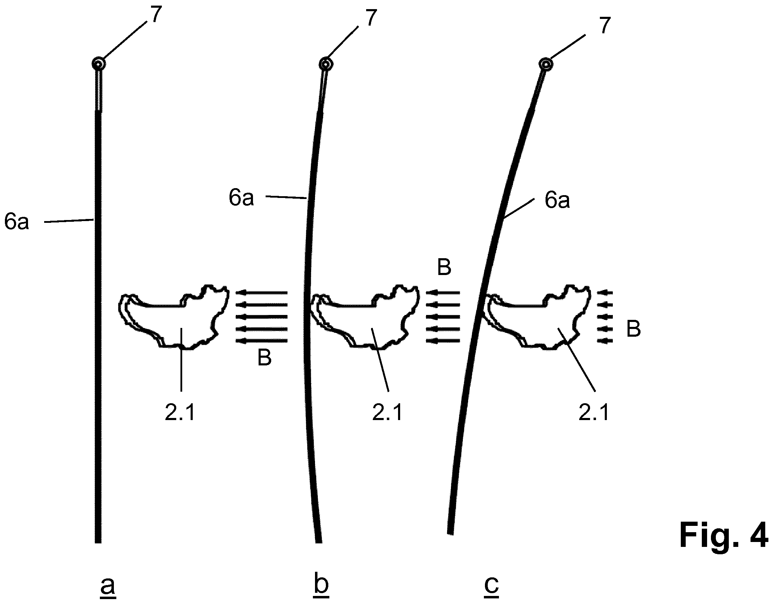

Die Funktion der Schutzverkleidung 5a bzw. der nur an ihrem oberen Ende frei pendelnd aufgehängten und am unteren Ende völlig freien Verkleidungssegmente 6a verdeutlicht die Darstellung der Figur 4. Die Position a zeigt ein auf die Schutzverkleidung 5a, beispielsweise auf wenigstens ein Verkleidungssegment 6a zufliegendes Behälterbruchstück 2.1. Beim Auftreffen dieses Behälterbruchstücks 2.1 weicht dieses Verkleidungssegment 6a zusammen mit dem Behälterbruchstück 2.1 schließlich seitlich aus, und zwar unter gleichzeitiger, elastischer, konkaver Verwölbung an der dem Behälterbruchstück 2.1 zugewandten Seite. Im weiteren Verlauf weicht das Verkleidungssegment 6a mit dem anliegenden bzw. durch das anliegende Behälterbruchstück 2.1 soweit aus, bis die kinetische Energie des Behälterbruchstücks 2.1 zumindest zum Großteil in potentielle Energie des Verkleidungssegmentes 6a umgewandelt und dadurch das Behälterbruchstück 2.1 abgebremst bzw. vom Verkleidungssegment 6a abgefangen ist.

Zum Abfangen von Behälterbruchstücken 2.1, die von der Behandlungsposition 3 nach oben weggeschleudert werden, weist die Schutzverkleidung 5a eine zusätzliche obere Schutzwand 10 auf. Diese ist von oberen Verkleidungssegmenten 11 gebildet, die mit einem rechteckförmigen Querschnitt hergestellt sind und die entlang der in ihrem wirksamen Zustand befindlichen Schutzverkleidung 5a aneinander anschließen. Die Verkleidungssegmente 11 sind jeweils an Halterungen 11.1 frei hängend gehalten, sodass auch sie beim Auftreffen von Behälterbruchstücken 2.1 ausweichen und dabei die kinetische Energie auftreffender Behälterbruchstücke 2.1 aufnehmen und vernichten können. Durch das elastische Verformen und/oder Ausweichen der Verkleidungssegmente 6a beim Auftreffen von Behälterbruchstücken 2.1 wird somit ein großer Teil der kinetischen Energie dieser Bruchstücke in Lageenergie der Verkleidungssegmente 6a umgewandelt, auch mit der Wirkung, dass ein weiteres Zerbrechen der Behälterbruchstücke 2.1 sowie insbesondere ein Zurückprallen dieser Bruchstücke in Richtung der Behandlungsmaschine 1 verhindert sind. Der Abbau in den Verleidungselementen 6a gespeicherten Lageenergie erfolgt deren Rückkehr in ihre jeweilige Ausgangspositionen, wobei diese Bewegung durch innere und äußere Reibung und auch durch den Luftwiderstand der sich bewegenden Verkleidungselemente 6a nur gedämpft erfolgt, wodurch die Lageenergie ohne unerwünschte Folgen abgebaut wird.

Da die Verkleidungselemente 6a in der zusammengeschobenen Position (Figur 7) noch voneinander beabstandet sind, eignet sich diese Position insbesondere auch zum Reinigen und/oder Desinfizieren der Verkleidungssegmente 6a, und zwar durch Abspritzen mit einem geeigneten Reinigungs- und/oder Desinfektionsmedium.

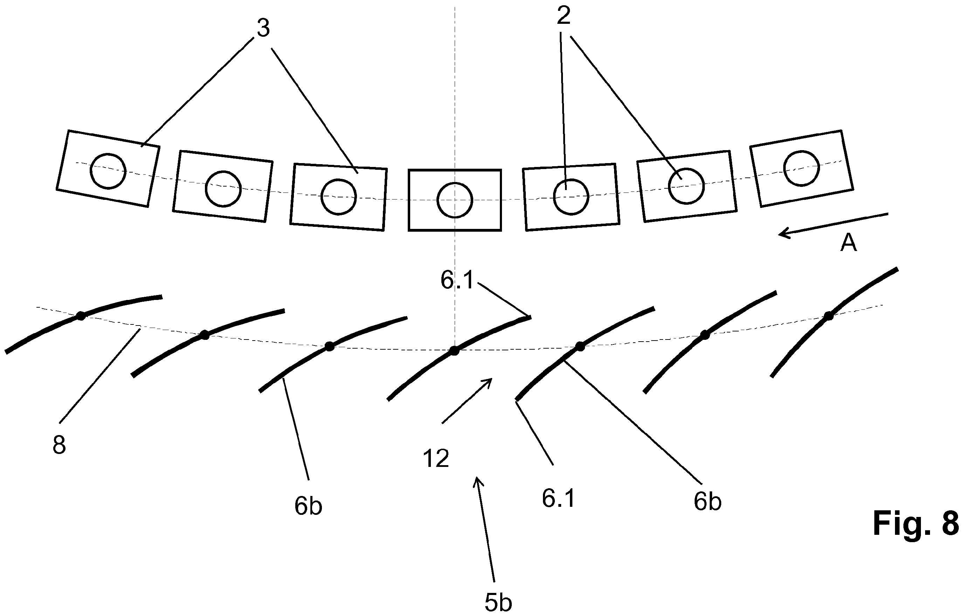

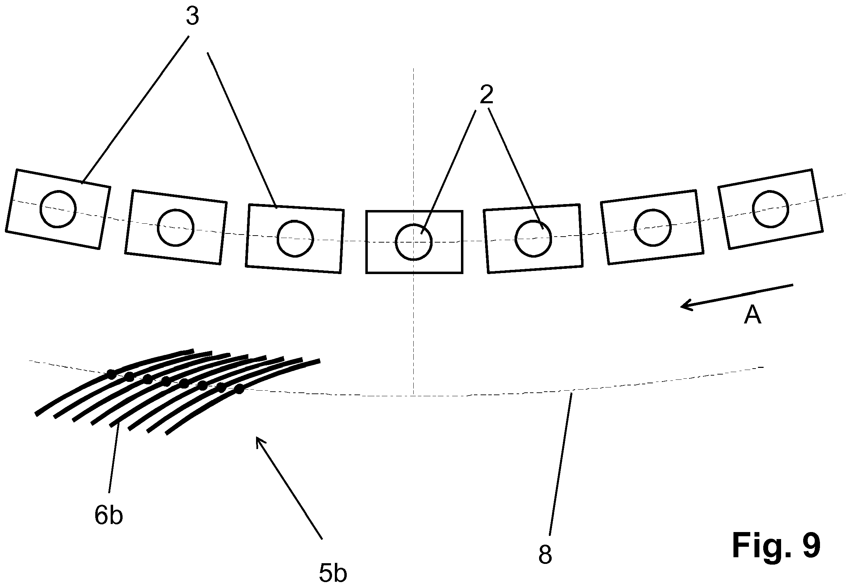

Die Figuren 8 und 9 zeigen die Verkleidungssegmente 6b der vertikalen Schutzwand 9 einer Schutzverkleidung 5b im wirksamen Zustand (Figur 8) sowie im vollständigen geöffneten Zustand dieser Schutzverkleidung, d.h. bei zusammengeschobenen Verkleidungssegmenten 6b. Die Schutzverkleidung 5b unterscheidet sich von der Schutzverkleidung 5a im Wesentlichen nur dadurch, dass die lamellenartigen Verkleidungssegmente 6b zumindest im Ausgangszustand um wenigstens eine Achse parallel zu ihrer vertikalen Längserstreckung leicht gewölbt sind, und zwar derart, dass die konvex gewölbte Seite im wirksamen Zustand der Schutzverkleidung 5b der Behälterbehandlungsmaschine 1 zugewandt ist. Weiterhin sind die Verkleidungssegmente 6b, die wiederum nur an ihrem oberen Ende frei pendelnd gehalten und am unteren Ende völlig frei sind, im wirksamen Zustand der Schutzverkleidung 5b (Figur 8) schräg gestellt und derart angeordnet, dass bei zwei aneinander anschließenden Verkleidungssegmenten 6b der Längsrand 6.1 des einen Verkleidungssegmentes 6b der Behälterbehandlungsmaschine 1 näher liegt als der diesem Längsrand benachbarte Längsrand 6.1 des anderen Verkleidungssegmentes 6b. Hierdurch ist zwischen den benachbarten Verkleidungssegmenten 6b zwar ein schräg zum Umfang des Rotor 4 orientierter Spalt 12 gebildet, beispielsweise für den Durchtritt einer durch den umlaufenden Rotor 4 erzeugten Luftströmung, dennoch überlappen sich die aufeinanderfolgenden Verkleidungssegmente 6b aber in einer Achsrichtung radial oder im Wesentlichen radial zur Maschinenachse MA soweit, dass von der Behandlungsmaschine 1 bzw. den Behandlungspositionen 3 nach außen wegbewegte oder weggeschleuderte Behälterbruchstücke 2.1 von der Schutzverkleidung 5b zuverlässig in der oben beschriebenen Weise abgefangen werden.

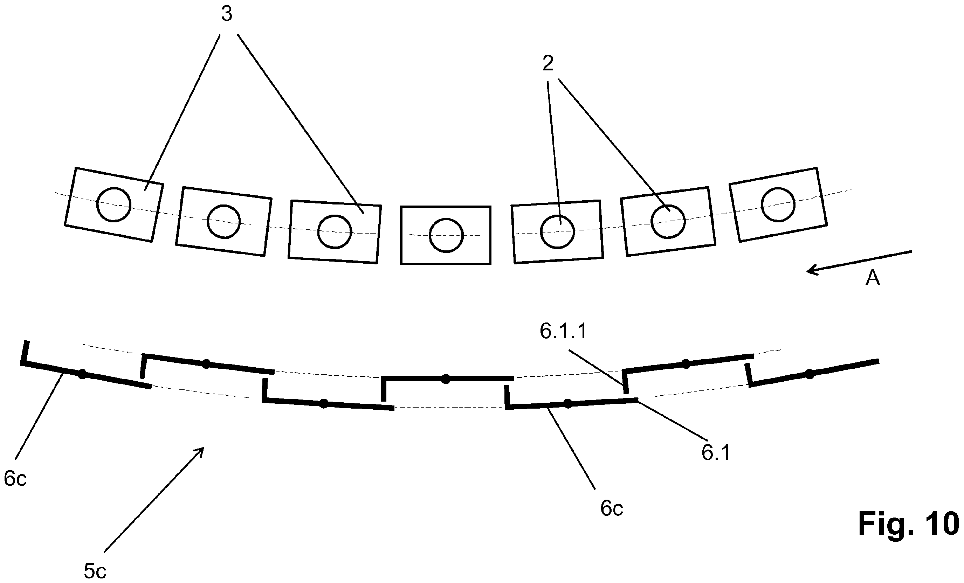

Die Figur 10 zeigt als weitere Ausführungsform eine Schutzverkleidung 5c mit einer Vielzahl von die vertikale Schutzwand dieser Verkleidung bildenden lamellenartigen Verkleidungssegmenten 6c, die jeweils an einer ihrer Längsseiten 6.1 mit einer Abwinklung 6.1.1 versehen sind. Für die pendelnde Aufhängung der Verkleidungssegmente 6 sind zwei Führungen 8 vorgesehen, die radial zur Maschinenachse um einen Betrag versetzt sind, der gleich oder im Wesentlichen gleich der Länge der Abwinklungen 6.1.1 ist. In dem in der Figur 10 dargestellten wirksamen Zustand der Schutzverkleidung 5c liegt die Abwinklung 6.1.1 eines Verkleidungssegmentes 6c gegen das benachbarte Verkleidungssegment 6c an oder ist diesem benachbart, und zwar an der die Abwinklung 6.1.1 nicht aufweisenden Längsseite 6.1.

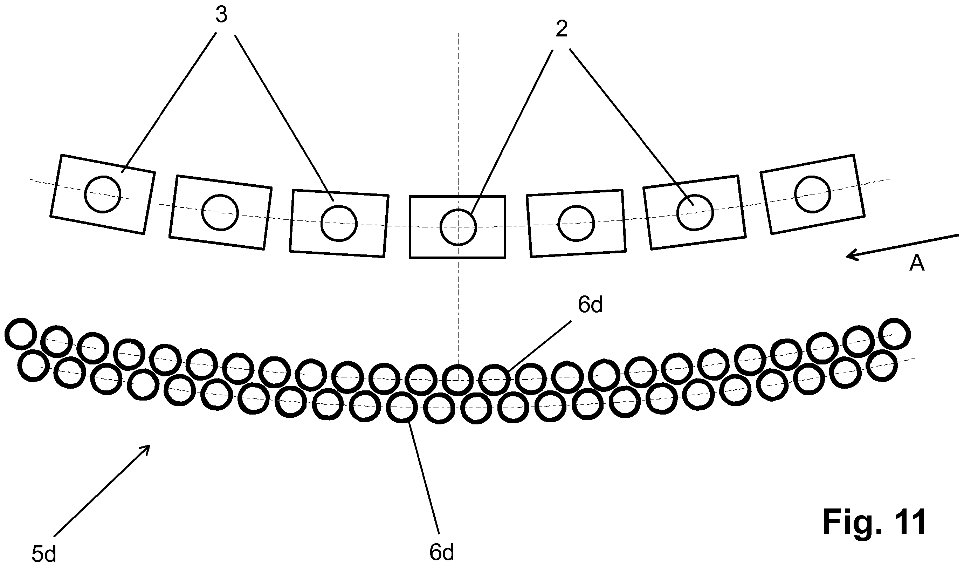

Die Figur 11 zeigt in einer Darstellung wie Figur 10 und im wirksamen Zustand eine Schutzverkleidung 5d mit mehreren Verkleidungssegmenten 6d, die nicht lamellenartig ausgeführt sind, sondern von Rohrstücken gebildet sind, die an ihrem oberen Ende an zwei Führungen frei pendelnd gehalten sind, und zwar derart, dass die Verkleidungssegmente 6d zumindest im wirksamen Zustand der Schutzverkleidung 5d zwei Reihen bilden und von Reihe zu Reihe auf Lücke versetzt sind.

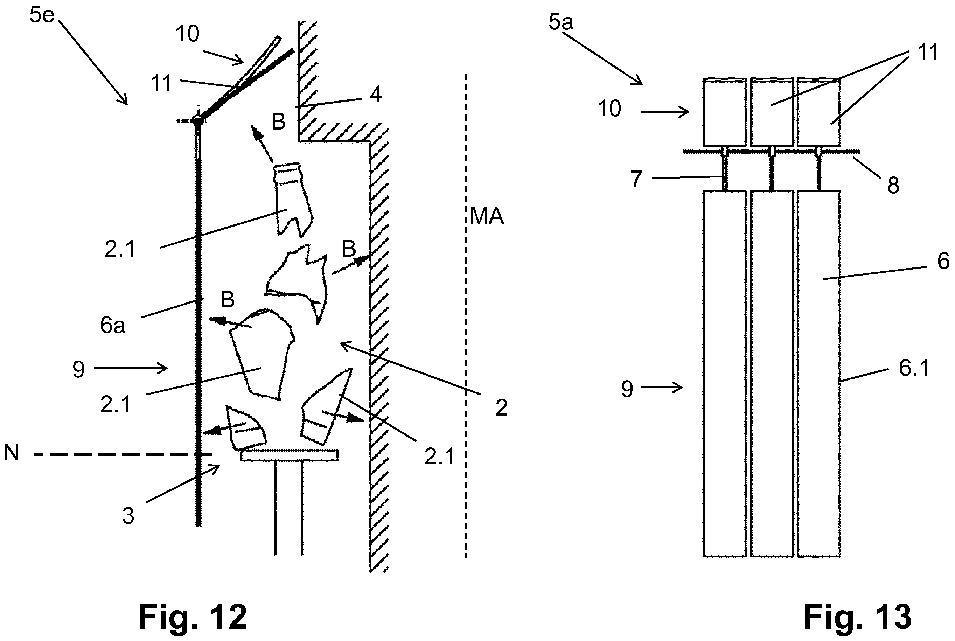

Die Figuren 12 und 13 zeigen in Darstellungen entsprechend den Figuren 2 und 3 eine Schutzverkleidung 5e, die sich von der Schutzverkleidung 5a - 5c lediglich dadurch unterscheidet, dass die oberen Verkleidungssegmente 11 nicht hängend an der jeweiligen Aufhängung 11.1 gehalten, sondern an der Führung 8 eingespannt sind, sodass diese Verkleidungssegmente 11 beim Auftreffen von Behälterbruchstücken 2.1 zur Übernahme und Vernichtung der kinetischen Energie elastisch ausweichen können.

Für die Herstellung der Verkleidungssegmente 6a - 6d und 11 eignen sich die unterschiedlichsten Werkstoffe, bevorzugt aber Kunststoffe. Bei einer besonders vorteilhaften Ausführungsform sind zumindest die Verkleidungssegmente 6a - 6d aus einem durchsichtigen Material hergestellt, beispielsweise aus Polycarbonat, sodass auch bei im wirksamen Zustand befindlicher Schutzverkleidung 5a die Behandlung der Behälter an den Behandlungspositionen 3 optisch überwacht werden kann. Durch Materialwahl und durch die Dimensionierung ist die Masse jedes Verkleidungssegmentes 6a - 6d beispielsweise so eingestellt, dass diese Masse wenigstens gleich oder bevorzugt größer ist als die Masse der größten zu erwartenden Behälterbruchstücke 2.1. Die Masse jedes Verkleidungssegmentes 6a - 6d beträgt z.B. wenigstens 50% der Masse der Behälter 2.

Insbesondere dann, wenn die Verkleidungssegmente 6a - 6d und 11 aus einem nicht metallischen Werkstoff bestehen, sind diese zumindest an derjenigen Oberflächenseite, die im wirksamen Zustand der Schutzverkleidung 5a - 5e der Behandlungsmaschine 1 bzw. dessen Rotor 4 zugewandt ist, mit einer flexiblen und/oder elastischen Beschichtung versehen, die eine Beschädigung dieser Oberflächenseite durch auftreffende Behälterbruchstücke 2.1 und/oder ein Eindringen von Behälterbruchstücken 2.1 verhindert und hierfür beispielsweise aus einem Material besteht, welches eine im Vergleich zum Material der Verkleidungssegmente 6a - 6d und 11 höhere Härte aufweist. Diese Beschichtung ist dann beispielsweise durchgehend ausgeführt oder aber von einer Vielzahl von einander benachbarten Beschichtungsbereichen oder-partikeln gebildet. Als Material für die Beschichtung eignen sich beispielsweise Glas oder aber Partikel aus einem harten Werkstoff, beispielsweise aus Glas oder Metall. Es versteht sich, dass die Beschichtung so dünn auf die Verkleidungssegmente 6a - 6d und 11 aufgebracht ist, dass die Flexibilität und Elastizität dieser Segmente erhalten bleiben. Zusätzlich zu der beschriebenen Ausbildung der Verkleidungssegmente 6a - 6d besteht auch die Möglichkeit als Verkleidungssegmente Kettenlängen hängend und ansonsten frei an der Führung 8 vorzusehen, wobei dann jedes Verkleidungssegment wenigstens eine Kettenlänge mit einer Vielzahl von Kettengliedern aufweist. Letztere bestehen wiederum aus einem metallischen Werkstoff oder aus Kunststoff.

Die Erfindung wurde voranstehend an Ausführungsbeispielen beschrieben. Es versteht sich, dass zahlreiche Änderungen sowie Abwandlungen möglich sind. Vorstehend wurde davon ausgegangen, dass die Schutzverkleidung 5a - 5e an der Behälterbehandlungsmaschine 1 in Form einer Füllmaschine verwendet wird. Selbstverständlich kann die erfindungsgemäße Schutzverkleidung mit den vorstehend genannten Vorteilen auch bei anderen Behälterbehandlungsmaschinen in kritischen Zonen oder Bereichen verwenden werden, in denen ebenfalls die Gefahr eines Behälterbruchs und hierbei von der Maschine wegbewegten oder weggeschleuderten, beispielsweise auch allein durch Zentrifugalkraft weggeschleuderten Behälterbruchstücken besteht.

Vorstehend wurde davon ausgegangen, dass die Verkleidungssegmente 6a - 6d an der Behälterbehandlungsmaschine 1 zur Bildung der Schutzwand 9 aufeinander folgend angeordnet und jeweils frei pendelnd nur an ihrem oberen Ende gehalten sind. Dieses ist jedoch nicht zwingend. Im Rahmen der vorliegenden Erfindung ist es ebenfalls vorgesehen, die Verkleidungselemente 6a - 6d an mindestens einem ihrer Enden elastisch aufzunehmen. Darunter ist zu verstehen, dass die Verkleidungselemente über eine Wirkverbindung mit einem elastisch verformbaren Element mit Ihrer Aufnahme und/oder der Behälterbehandlungsmaschine verbunden werden. Trifft nun bei dieser Ausführungsform ein Glassplitter oder eine Glasscherbe auf ein Verkleidungselement 6a - 6d, so kann es sich weiterhin elastisch verformen. Zusätzlich wird jedoch auch das elastische Aufnahmeelement elastisch verformt. Ist anschließend die Einwirkung des Glassplitter oder der Glasscherbe beendet, so kehrt das elastisch verformbare Element in seine ursprüngliche Gestalt zurück, wobei jedoch ein Teil der durch die elastische Verformung gespeicherten Energie durch innere oder äußere Reibungsvorgänge in Wärme umgewandelt wurde. Auch durch diese Vorgehensweise werden die Auswirkungen von platzenden Glasflaschen oder ähnlicher, aus Glas bestehender Behälter erheblich vermindert. Auf eine zeichnerische Darstellung dieser Ausführungsform wurde verzichtet.

### Bezugszeichenliste

- 1: Behälterbehandlungsmaschine
- 1.1: Behältereinlauf
- 1.2: Behälterauslauf
- 2: Behälter
- 2.1: Behälterscherbe oder -Bruchstück
- 3: Behandlungsposition
- 4: Rotor
- 5a - 5e: Schutzverkleidung
- 6a - 6d: Verkleidungssegment
- 6.1: Längsseite
- 6.1.1: Abwinklung
- 7: Tragelement
- 8: Führung
- 9: vertikale Schutzwand der Schutzverkleidung
- 10: obere Schutzwand der Schutzverkleidung
- 11: Verkleidungssegment
- 11.1: Aufhängung
- 12: Spalt
- A: Drehrichtung des Rotors 4
- B: Bewegungsrichtung der Behälterbruchstücke 2.1
- N: Niveau
- MA: Maschinenachse

## Patentansprüche

1. Behälterbehandlungsmaschine, mit einer an einem kritischen Bereich der Behälterbehandlungsmaschine (1) angeordneten Schutzverkleidung (5a - 5e), die wenigstens eine Schutzwand (9) aufweist zum Auffangen von Behälterscherben oder Behälterbruchstücken (2.1), die von der Behälterbehandlungsmaschine (1) wegbewegt oder weggeschleudert werden, **dadurch gekennzeichnet, dass** die Schutzverkleidung (5a - 5e) aus einer Vielzahl von ersten Verkleidungssegmenten (6a - 6d) gebildet sind, die zur Bildung der Schutzwand (9) aufeinander folgend angeordnet und jeweils a) frei pendelnd nur an ihrem oberen Ende gehalten sind oder b) an mindestens einem Ende über eine Wirkverbindung mit einem elastisch verformbaren Element mit der Behälterbehandlungsmaschine verbunden sind, und wobei sich die unteren Enden der Verkleidungssegmente (6a - 6e) unterhalb eines Niveaus der Behandlungspositionen (3) der Behälterbehandlungsmaschine (1) und/oder unterhalb eines Niveaus (N) befinden, auf dem sich die Behälter (2) bei der Behandlung mit ihren unteren Bereich oder Behälterboden bewegen.

2. Behälterbehandlungsmaschine nach Anspruch 1, **dadurch gekennzeichnet, dass** die Verkleidungssegmente (6a - 6d) lamellenartig, als Rohrstück oder als Ketten oder Kettenlängen mit einer Vielzahl von Kettengliedern ausgebildet sind.

3. Behälterbehandlungsmaschine nach Anspruch 2, **dadurch gekennzeichnet, dass** die lamellenartigen Verkleidungssegmente (6a - 6c) jeweils von einem vorzugsweise rechteckförmigen Zuschnitts eines Flachmaterials gebildet sind, beispielsweise von einem planen oder im Wesentlichen planen Zuschnitt, einem zumindest um eine Längsachse des jeweiligen Verkleidungssegments (6b) gewölbten Zuschnitt und/oder von einem wenigstens an einer Längsseite mit einer Abwicklung (6.1.1) ausgebildeten Zuschnitt.

4. Behälterbehandlungsmaschine nach einem der Ansprüche 2 oder 3, **dadurch gekennzeichnet, dass** zumindest die lamellenartigen Verkleidungssegmente (6a - 6c) auch um ihre Längsachse schwenkbar sind und/oder zum Öffnen der Schutzverkleidung (5a - 5c) derart zusammenschiebbar sind, dass sie bei geöffneter Schutzverkleidung (5a - 5c) mit ihren Oberflächenseiten einander benachbart stapelartig angeordnet sind.

5. Behälterbehandlungsmaschine nach einem der vorhergehenden Ansprüche, **dadurch gekennzeichnet, dass** die Verkleidungssegmente (6a - 6d) an wenigstens einer oberen Führung, vorzugsweise entlang dieser Führung verschiebbar gehalten sind.

6. Behälterbehandlungsmaschine nach einem der vorhergehenden Ansprüche, **dadurch gekennzeichnet, dass** die Schutzverkleidung (5a - 5e) eine zusätzliche obere Schutzwand (10) aufweist, die von Verkleidungssegmenten (11) gebildet ist, welche aneinander anschließend frei hängend oder für ein elastisches Ausweichen gehalten und vorzugsweise von Zuschnitten eines Flachmaterials gebildet sind.

7. Behälterbehandlungsmaschine nach einem der vorhergehenden Ansprüche, **dadurch gekennzeichnet, dass** die Verkleidungssegmente (6a - 6d; 11) aus einem metallischen Werkstoff oder aus Kunststoff bestehen, beispielsweise aus einem durchsichtigen Kunststoff, z.B. aus Polycarbonat.

8. Behälterbehandlungsmaschine nach einem der vorhergehenden Ansprüche, **dadurch gekennzeichnet, dass** die Verkleidungssegmente (6a - 6d) zumindest an einer der Behälterbehandlungsmaschine (1) zugewandten Seite mit einer Beschichtung aus einem Material versehen sind, dessen Härte größer ist als die Härte des Materials der Verkleidungssegmente (6a - 6d), wobei die Beschichtung vorzugsweise aus Glas oder Metall besteht, wobei die Beschichtung bevorzugt dünn, flexibel und elastisch ausgebildet ist.

## Claims

1. Receptacle treatment machine, with a protective cladding (5a-5e) arranged at a critical region of the container handling machine (1), comprising at least one protective wall (9) for intercepting receptacle fragments or broken pieces (2.1) that move or are projected away from the receptacle treatment machine (1), **characterised in that** the protective cladding (5a-5e) is formed from a plurality of first cladding segments (6a-6d), which for the formation of the protective wall (9) are arranged following one another and in each case are held a) swinging freely only at their upper end, or b) are connected at least at one end, by means of a working connection with an elastically deformable element, to the receptacle treatment machine, and wherein the lower ends of the cladding segments (6a-6e) are located beneath a level of the treatment positions (3) of the receptacle treatment machine (1) and/or beneath a level (N) on which the receptacles (2) move with their lower region or receptacle base during the treatment.

2. Receptacle treatment machine according claim 1, **characterised in that** the cladding segments (6a-6d) are configured as in the form of plates, tubular elements, or as chains or chain lengths with a plurality of chain links.

3. Receptacle treatment machine according claim 2, **characterised in that** the plate type cladding segments (6a-6c) are formed in each case from a preferably rectangular blank cut from a flat material, for example from a flat or essentially flat blank, a blank cambered at least about a longitudinal axis of the respective cladding segment (6b), and/or a blank formed with a winding (6.1.1) on at least one longitudinal side.

4. Receptacle treatment machine according to any one of claims 2 or 3, **characterised in that** at least the plate type cladding segments (6a-6c) can be pivoted about their longitudinal axis and/or can be pushed together for the opening of the protective cladding (5a-5c), and that, with the protective cladding (5a-5c) open, they are arranged in stack fashion with their surface sides adjacent to one another.

5. Receptacle treatment machine according to any one of the preceding claims, **characterised in that** the cladding segments (6a-6d) are held such that they can be displaced on at least one upper guide element, preferably along this guide element.

6. Receptacle treatment machine according to any one of the preceding claims, **characterised in that** the protective cladding (5a-5e) comprises an additional upper protective wall (10), which is formed from cladding segments (11), which are held hanging freely connecting to one another or for elastic movement deviation, and are preferably formed from blanks of a flat material.

7. Receptacle treatment machine according to any one of the preceding claims, **characterised in that** the cladding segments (6a-6d; 11) consist of a metallic material or of plastic, for example of a transparent plastic, such as from polycarbonate.

8. Receptacle treatment machine according to any one of the preceding claims, **characterised in that** cladding segments (6a-6d) are provided on at least one side facing towards the receptacle treatment machine (1) with a coating of a material, the hardness of which is greater than the hardness of the material of the cladding segments (6a-6d), wherein the coating consists preferably of glass or metal, wherein the coating is preferably configured as thin, flexible, and elastic.

## Revendications

1. Machine de traitement de contenants, avec un habillage de protection (5a - 5e) disposé au niveau d'une zone critique de la machine de traitement de contenants (1), qui présente au moins une paroi de protection (9) servant à collecter des éclats de contenant ou des fragments de contenant (2.1), qui sont évacués par déplacement ou projection de la machine de traitement de contenants (1), **caractérisée en ce que** l'habillage de protection (5a - 5e) est formé à partir d'une pluralité de premiers segments d'habillage (6a - 6d), qui sont disposés de manière à se suivre les uns les autres pour former la paroi de protection (9) et a) sont maintenus respectivement de manière oscillante librement seulement au niveau de leur extrémité supérieure ou b) sont reliés à la machine de traitement de contenants au niveau d'au moins une extrémité par l'intermédiaire d'une liaison active avec un élément élastiquement déformable, et dans laquelle les extrémités inférieures des segments d'habillage (6a - 6e) se trouvent sous un niveau des postes de traitement (3) de la machine de traitement de contenants (1) et/ou sous un niveau (N), sur lequel les contenants (2) se déplacent lors du traitement par leur zone inférieure ou fond de contenant.

2. Machine de traitement de contenants selon la revendication 1, **caractérisée en ce que** les segments d'habillage (6a - 6d) sont réalisés à la manière de lamelles, en tant que pièce tubulaire ou en tant que chaînes ou longueurs de chaîne avec une pluralité de maillons de chaîne.

3. Machine de traitement de contenants selon la revendication 2, **caractérisée en ce que** les segments d'habillage (6a - 6c) de type lamelles sont formés respectivement par une découpe de préférence de forme rectangulaire d'un matériau plat, par exemple par une découpe plane ou sensiblement plane, une découpe bombée au moins autour d'un axe longitudinal du segment d'habillage (6b) respectif et/ou par une découpe réalisée au moins au niveau d'un côté longitudinal avec un déroulement (6.1.1).

4. Machine de traitement de contenants selon l'une quelconque des revendications 2 ou 3, **caractérisée en ce qu'**au moins les segments d'habillage (6a - 6c) de type lamelles peuvent être pivotés également autour de leur axe longitudinal et/ou peuvent être poussés pour être réunis pour ouvrir l'habillage de protection (5a - 5c) de telle manière qu'ils sont disposés à la manière d'une pile de manière adjacente les uns aux autres par leurs côtés de surface lorsque l'habillage de protection (5a - 5c) est ouvert.

5. Machine de traitement de contenants selon l'une quelconque des revendications précédentes, **caractérisée en ce que** les segments d'habillage (6a - 6d) sont maintenus de manière à pouvoir être coulissés au niveau d'au moins un guidage supérieur, de préférence le long dudit guidage.

6. Machine de traitement de contenants selon l'une quelconque des revendications précédentes, **caractérisée en ce que** l'habillage de protection (5a - 5e) présente une paroi de protection (10) supérieure supplémentaire, qui est formée par des segments d'habillage (11), qui sont maintenus de manière à être situés dans le prolongement les uns des autres en suspension libre ou pour un dégagement élastique et sont formés de préférence par des découpes d'un matériau plat.

7. Machine de traitement de contenants selon l'une quelconque des revendications précédentes, **caractérisée en ce que** les segments d'habillage (6a - 6d ; 11) sont constitués d'un matériau métallique ou d'une matière plastique, par exemple d'une matière plastique transparente, par exemple de polycarbonate.

8. Machine de traitement de contenants selon l'une quelconque des revendications précédentes, **caractérisée en ce que** les segments d'habillage (6a - 6d) sont pourvus au moins au niveau d'un côté tourné vers la machine de traitement de contenants (1) d'un revêtement composé d'un matériau, dont la dureté est supérieure à la dureté du matériau des segments d'habillage (6a - 6d), dans laquelle le revêtement est constitué de préférence de verre ou de métal, dans laquelle le revêtement est réalisé de manière préférée de manière mince, flexible et élastique.
